# EUROPEAN PATENT SPECIFICATION

(11) **EP 3 277 070 B1**
(45) Date of publication and mention of the grant of the patent: **29.01.2020**
(21) Application number: 15886939.6
(22) Date of filing: 01.04.2015
(51) Int. Cl.: A01D 34/82, B25G 3/00

(54) **HANDLE WITH WIRELESS CONTROL**
GRIFF MIT DRAHTLOSER STEUERUNG
MANCHE AVEC COMMANDE SANS FIL

(43) Date of publication of application: 07.02.2018
(73) Proprietor: Techtronic Outdoor Products Technology Limited, Hamilton HM12 (BM)
(72) Inventor: WONG, Wai For, HongKong (CN); RICKEY, Todd, Hong Kong (CN)
(74) Representative: Stevenson-Hill, Jack Patrick
(86) International application number: PCT/CN2015/075702
(87) International publication number: WO 2016/154969

(56) References cited:
- EP-A1- 1 459 615
- EP-A1- 1 530 890
- EP-A1- 2 789 221
- EP-A1- 2 789 221
- CN-A- 101 010 000
- CN-A- 101 745 901
- DE-U1- 29 521 118
- US-A- 6 082 087
- US-A1- 2013 111 865

## Description

### FIELD OF THE INVENTION

The present invention relates to a handle. More specifically, the present invention relates to a handle for a grass mower.

### BACKGROUND

Grass mowers typically can be divided into either larger lawn mowers or smaller grass trimmers. Grass mowers in the market may be either electric or gas-powered.

Lawn mowers are well-known and typically have a wheeled chassis and one or more handles to allow a user to push, hold, and steer the lawn mower. The handles typically possess controls such as levers, buttons, swing arms, etc. to control, for example, the starting/stopping of the motor, the speed of the lawn mower's driving wheel(s), the steering mechanism, and other functions.

Grass trimmers are typically smaller and lighter weight than a lawn mower and typically possess a cutting line, or in some cases a blade which rotates to cut the grass. Such grass trimmers may be completely hand-held, or may also possess a shoulder strap or other support so that they may he hung on the body. Grass trimmers also typically contain a handle with a set of controls which allow the user to control certain functions such as the starting/stopping of the motor and perhaps others.

However, it has been found that placing the controls on the handle requires a significant amount of wiring and sometimes engineering to make sure that the wiring is not accidentally cut or damaged during use, storage, and/or folding of the grass mower. Furthermore, such wires increase manufacturing complexity, cost, and may make maintenance more difficult.

Accordingly, the need remains for a handle which reduces the need for wiring and which allows easier repair and/or reduced cost.

According to its abstract, EP-A-2789221 describes a handlebar carrier for a power operated tool, or a tool such as a brush cutter having such a carrier. The carrier has a carrier body and handlebar clamp attached to the carrier body. The carrier body is attached to the tool. The handlebar clamp movably couples the handlebar to the carrier body. The handlebar is moveable between an operational position and a first non-operational position. A motor kill-switch is located on or with the handlebar carrier and is operable to prevent operation of the motor when the handlebar is moved out of the operational position.

According to its abstract, EP-A-1459615 describes a walk-behind electric working machine (10) that includes an operating handle section (18) extending rearwardly from a rear portion of a machine body frame (17). The operating handle section (51) includes a handle post (122) removably attached to a handle support provided on a rear portion of the machine body frame, and a handle (124) attached to the handle post and having left and right grip portions (70, 80). The right grip portion (80) includes a work preparing lever (82), and the left grip portion (70) includes a work starting operation button (72). Electric motor (11) for driving cultivating claws (13) is activated in response to operation of both the work preparing lever and the work starting operation button.

According to a machine translation of its opening statement, DE-U-29521118 describes an electric motor driven gardening implement.

According to its abstract, US-A-2013/111865 describes a lawn mower including an internal combustion engine, an electric motor configured to start the engine, a blade driven by the engine, and an assembly for stopping at least one of the blade and the engine. The assembly includes a brake mechanism, a release mechanism movable to an engaged position to release the brake mechanism, an interlock configured to selectively prevent the release mechanism from moving to the engaged position, and an interface allowing an operator to release the interlock to allow the release mechanism to move to the engaged position. The lawn mower further includes a switch actuated by the release mechanism and a control module coupled to the switch so that the switch provides a signal to the control module when the release mechanism is in the engaged position and the control module turns on the electric motor in response to the signal to start the engine.

### SUMMARY OF THE INVENTION

The present invention relates to a a lawn mower comprising a handle, the handle having a base, a handlebar and a sensor. The base contains a handlebar lock connector and a base lock that securably attaches to the grass mower. The handlebar contains a handlebar lock that is releasably securable to the handlebar lock connector. The handlebar also contains a wireless remote control for controlling a mower function. The sensor is in a sensor location selected from the base and/or the handlebar lock, and detects whether the handlebar is correctly aligned to the base. Furthermore the sensor only allows the wireless remote to control the mower function when the sensor detects that the handlebar is correctly aligned to the base.

Without intending to be limited by theory, it is believed that the present invention has one or more significant benefits such as a reduced manufacturing complexity, easier access for repairs, and/or reduced wiring. Other surprising benefits will be apparent to those in the art as well.

### BRIEF DESCRIPTION OF THE DRAWINGS

Fig. 1 shows a perspective view of an embodiment a lawn trimmer,
Fig. 2 shows a bottom view of an embodiment of a handlebar;
Fig. 3 shows a partial top view of an embodiment of a base of the present invention; and
Fig. 4 shows a perspective view of an embodiment a lawn mower of the present invention.

The figures herein are for illustrative purposes only and are not necessarily drawn to scale.

### DESCRIPTION OF THE PREFERRED EMBODIMENTS

Grass mowers have typically been made with control wires running from physical levers, dials, grips, etc. through the handles and connecting to a controller such as a central CPU, PCB, etc. The controller then takes signals from the physical levers, dials, grips, etc. and regulates a mower function such as, for example, a cutting motor, a driving wheel, a searing mechanism, and a combination thereof. However, to manufacture such a grass mower requires stringing the wires from the CPU, to the relevant motor function(s), and through the (typically) hollow handle, or having them hang outside of the handle. Obviously from a manufacturing standpoint it would be desirable to remove such complexity and such complicated assembly steps.

Furthermore, if the wires are strung inside of the tubing, then they may crimp, fray or break when the handle is folded for storage, and/or disassembled partially or completely. Breaks in the wire or short circuits are very difficult to diagnose due to the length and the positioning of the wires.

However, the present inventors have solved these problems by removing many wires completely and replacing them with a wireless remote control. Thus, the present invention relates to a grass mower. The grass mower is a lawn mower.

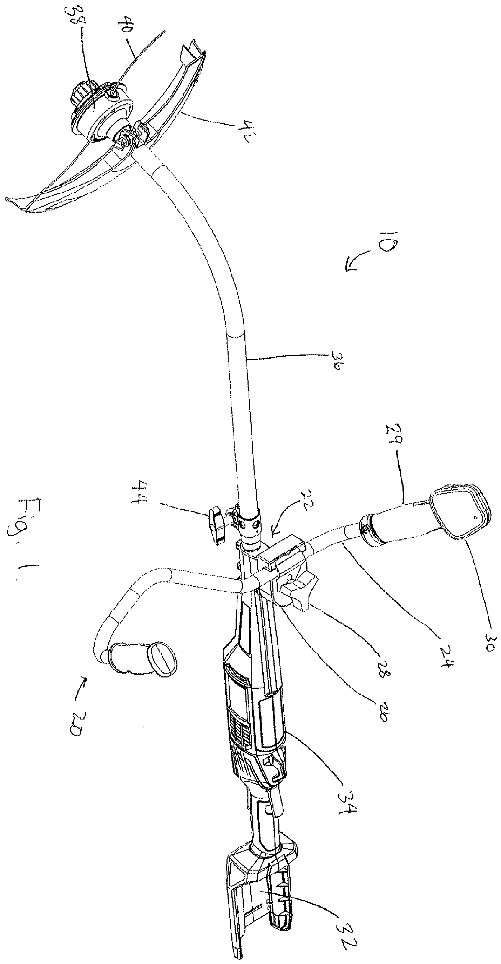

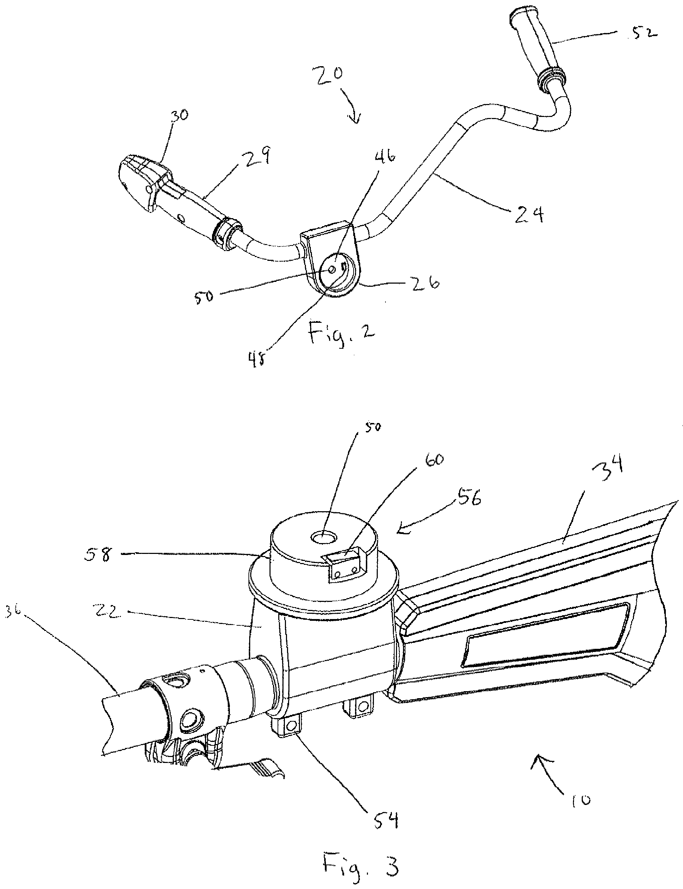

Fig. 1 shows a perspective view of an embodiment a grass trimmer, 10. This lawn trimmer, 10, has a handle, 20, attached to the lawn trimmer, 10. A base, 22, has a base lock (see Fig. 3 at 54) which securably attaches to the lawn trimmer, 10. A handlebar lock connector (see Fig. 3 at 56) is provided which is typically operatively connected to the base lock (see Fig. 3 at 54). Tomorrow the handlebar lock connector (see Fig. 3 at 56) is permanently connected to the base lock (see Fig. 3 at 54).

A handlebar, 24, has a handlebar lock, 26, which is releasably securable to the handlebar lock connector (se Fig. 3 at 56), via, for example, a screw knob, 28, which may be easily tightened or loosened by hand. Other securing mechanisms known in the art are also useful herein to secure the handlebar, 24, to the base, 22. A hand grip, 29, is located at one end of the handlebar, 24, or both ends of the handlebar, 24.

A wireless remote control, 30, is provided on a hand grip, 29, for controlling a mower function. The mower function may be, for example, a cutting motor, a driving wheel, a steering mechanism, or even a combination thereof; or a cutting motor; or a cutting blade; or a cutting line. The wireless remote control, 30, typically contains one or more operatively connected features such as a PCB, a transmitter, a receiver, a battery, a power (e.g., on/off) switch, a display, etc. The wireless remote control may further contain, for example a trigger switch. The trigger switch may actuate the transmitter.

The wireless remote control may operate via a wireless method using, for example, radio waves, light, sound waves, and a combination thereof. If the wireless remote control operates via radio waves, then the radio waves may employ a wireless protocol selected from, for example, Wi-Fi, Bluetooth, ZigBee, Z-wave, and a combination thereof; or Wi-Fi, Bluetooth, and a combination thereof, or Wi-Fi. If the wireless remote control operates via light, then the light may be selected from, for example, infrared light, ultraviolet light, and a combination thereof; or infrared light. If the wireless remote control operates via sound waves, the sound waves may be, for example, ultrasonic sound waves. The wireless remote control may further include some form of encryption so also to prevent unauthorized access to the wireless remote, the controller, the grass mower, etc.

In Fig. 1, the grass trimmer, 10, is an electric grass trimmer, although a gas-powered grass trimmer is also useful herein. The grass trimmer, 10, has a battery receptacle, 32, into which a battery (not shown) is affixed for use. The battery receptacle, 32, in Fig. 1 is attached to a chassis, 34. The cutting motor (not shown) is inside the chassis, 34, and a tube, 36, encloses a rotating cable (not shown) which in turn rotates the head, 38, from which the cutting line, 40, protrudes. A partially-cut-away shield, 42, serves to help protect the user and others from grass and other objects which may otherwise be kicked up and hit the user or others during use of the grass trimmer, 10. A screw knob, 44, removably affixes the chassis, 34, to the tube, 36. As described herein, the tube, 36, is considered to be a portion of the chassis, 34.

In the embodiment of Fig. 1, the chassis, 34, also contains a receiver (not shown); or a wireless receiver; which receives the wirelessly transmitted instructions from the remote control, 30. The wireless receiver then is typically operatively connected to the mower function via, for example, a controller (not shown) which contains one or more of a battery, a CPU, a PCB, a power switch, a receiver, a transmitter, a display, etc.; or a CPU, a PCB, a receiver, and a power switch.

Typically in any embodiment herein, when the wireless remote control is activated, it sends a wireless signal to the receiver which then passes a signal on to the controller. The controller, which is operatively connected to the mower function, then controls the motor function, by, for example, turning it on, turning it off, speeding it up, slowing it down, turning it, etc. Typically, the wireless remote control will control the cutting motor by, for example, one or more of turning it on, turning it off, speeding it up and/or slowing it down.

Fig. 2 shows a bottom view of an embodiment of a handlebar, 24. As can be seen, the handlebar lock, 26, contains a female portion, 46, which is an indented portion of the handlebar lock, 26, Inside of the female portion is a tab, 48, protrudes from the underside of the handlebar lock, 26. The tab, 48, is adjacent to a hole, 50, through which the screw knob, 28, fits to tighten the handlebar lock, 26, on to the handlebar lock connector (see Fig. 3 at 56). In Fig. 2, a second hand grip, 52, is provided on the asymmetric handlebar, 24, opposite the hand grip, 29.

Fig. 3 shows a partial top view of an embodiment of a base, 22, of the present invention. The base, 22, has a base lock, 54 which is securably attached to the chassis, 34, near where the tube, 36, is located. Thus the base lock, 54, securably attaches the base, 22, to the grass mower, which in this embodiment is the grass trimmer, 10, at the chassis, 34. The base lock, 54, may be either permanently attached or removably attached to the chassis, 34. Opposite the base lock, 54, on the base, 22, is the handlebar lock connector, 56, which contains a male portion, 58, containing a sensor, 60, which is depressed by the tab (see Fig. 2 at 48), when the handlebar lock, 26, is secured to the handlebar lock connector, 56, via, for example a screw knob (see Fig. 2 at 28), that fits through the hole, 50 to secure the handlebar (see Fig. 2 at 20) to the base, 22.

The sensor, 60, may be, for example, a microswitch. The sensor, 60, may be in a sensor location selected from the base (see Fig. 2 at 22,) the handlebar lock (see Fig. 2 at 26), and a combination thereof; or the handlebar lock(see Fig. 2 at 26) and the handlebar lock connector, 56. The sensor, 60, detects when the handlebar, 20, is correctly aligned; or affixed to and aligned, to the base (see Fig. 1 at 22). When the handlebar, 20, is correctly aligned with the base (see Fig. 1 at 22), then the sensor, 60, allows the wireless remote control, 30, to control the mower function. However, when the handlebar, 20, is not correctly aligned, or affixed to and aligned, with the base (see Fig. 1 at 22), then the sensor, 60, detects this and does not allow the remote control (see Fig. 1 at 30) to control the mower function. The sensor may do this, by, for example communicating with the controller to send a cancellation signal, by communicating with the controller to send an activation signal,, by being wired in series with the controller so as to cut the circuit if the sensor does not detect the correct alignment; or affixation and alignment, etc.

The sensor, 60; or a microswitch; is operatively connected to the controller (not shown), so that when handlebar the switch, 60, is depressed, then the controller accepts the instructions from the wireless remote control, 30.

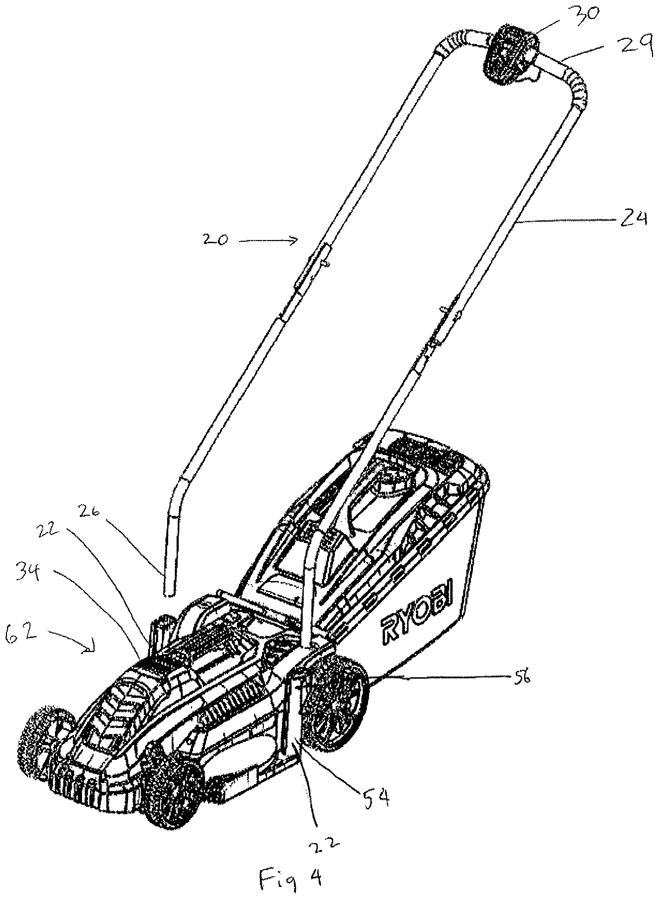

Fig. 4 shows a perspective view of an embodiment a lawn mower, 62, of the present invention. The lawn mower herein may be an electric lawn mower, a gas-powered lawn mower, or a combination thereof. The lawn mower, 62, has a chassis, 34, with a controller therein (not shown) which is operatively connected to a mower function. A cutting motor (not shown) is inside of and affixed to the chassis, 34. A handle, 20, contains a base, 22, and in this embodiment a pair of mirror-image bases, 22, each having a base lock, 54, which securably attaches to the lawn mower, 62, in this embodiment, at the chassis, 34. The base lock, 54, may be either permanently attached or removably attached to the chassis, 34. Each base, 22, contains a handlebar lock connector, 56, is located in the base, 22. The handlebar lock, 26, is releasably securable to its respective handlebar lock connector, 56. In this embodiment, the handlebar lock, 26 is a male portion, which fits into the female portion of the handlebar lock connector, 56. A hand grip, 29, at the top of the handle, 20, contains a wireless remote control, 30, which sends a wireless transmission to a controller (not shown).

A sensor (see, e.g., Fig. 3 at 60) is in either the base, 22, the handlebar lock, 56, or both. The sensor (see, e.g., Fig. 3 at 60) detects whether the handlebar, 20, is correctly aligned; or affixed and aligned. The sensor (see, e.g., Fig. 3 at 60) only allows the wireless remote control, 30, to control the lawn mower's, 62, mower function; or cutting motor (not shown), driving wheel, and/or steering; when the sensor detects that the handlebar, 20, is correctly aligned; or affixed and aligned. Thus, when the controller (not shown) receives a wireless transmission from the wireless remote control, 30, then the controller (not shown) controls the mower function; or the cutting motor, the driving wheel, the steering, or a combination thereof, based on the wireless transmission, but only if the handlebar, 20, is correctly aligned; or affixed and aligned.

It should be understood that the above only illustrates and describes examples whereby the present invention may be carried out, and that modifications and/or alterations may be made thereto without departing from the scope of the invention as defined by the claims.

It should also be understood that certain features of the invention, which are, for clarity, described in the context of separate embodiments, may also be provided in combination in a single embodiment. Conversely, various features of the invention which are, for brevity, described in the context of a single embodiment, may also be provided or separately or in any suitable subcombination.

## Claims

1. A lawn mower (62) comprising a handle (20), the handle comprising:
A. a base (22) comprising:
i. a base lock (54) wherein the base lock securably attaches to the lawn mower; and
ii. a handlebar lock connector (56);
B. a handlebar (24) comprising:
i. a handlebar lock (26) releasably securable to the handlebar lock connector; and;
ii. a wireless remote control (30) for controlling a mower function; and
C. a sensor (60) in a sensor location selected from the group consisting of the base, the handlebar lock, and a combination thereof, wherein the sensor detects whether the handlebar is correctly aligned, and
wherein the sensor only allows the wireless remote control to control the mower function when the sensor detects that the handlebar is correctly aligned.

2. The lawn mower (62) according to Claim 1, wherein the wireless remote control (30) controls a mower function selected from the group consisting of a cutting motor, a driving wheel, a steering mechanism, and a combination thereof.

3. The lawn mower (62) according to Claim 1, wherein the wireless remote control (30) comprises a transmitter.

4. The lawn mower (62) according to Claim 1 wherein the wireless remote control (30) comprises a receiver.

5. The lawn mower (62) according to Claim 1 wherein the wireless remote control (30) operates via a wireless method selected from the group consisting of radio waves, light, sound waves, and a combination thereof.

6. The lawn mower (62) according to Claim 5, wherein the radio waves employ a communication protocol selected form the group consisting of Wi-Fi, Bluetooth, ZigBee, Z-wave, and a combination thereof.

7. The lawn mower (62) according to Claim 5, wherein the light are selected from the group consisting of infrared light, ultraviolet light, and a combination thereof.

8. The lawn mower (62) according to Claim 5, wherein the sound waves are ultrasonic sound waves.

9. The lawn mower (62) according to Claim 1, further comprising:
a chassis (34) comprising a controller, the controller operatively connected to a mower function; and
a cutting motor affixed to the chassis;
wherein the controller receives a wireless transmission from the wireless remote control (30), and wherein the controller controls the mower function based on the wireless transmission.

## Patentansprüche

1. Rasenmäher (62), umfassend einen Griff (20), wobei der Griff umfasst:
A. eine Basis (22), umfassend:
i. einen Basisverschluss (54), wobei der Basisverschluss an dem Rasenmäher sicher befestigt ist; und
ii. einen Griffstangenverschlussstecker (56);
B. eine Griffstange (24), umfassend:
i. einen Griffstangenverschluss (26), welcher lösbar an dem Griffstangenverschlussstecker befestigbar ist; und
ii. eine drahtlose Fernsteuerung (30) zum Steuern einer Mähfunktion; und
C. einen Sensor (60), in einer Sensorlage angeordnet, ausgewählt aus der Gruppe bestehend aus der Basis, dem Griffstangenverschluss, und einer Kombination davon, wobei der Sensor erkennt, ob die Griffstange ordnungsgemäß ausgerichtet ist, und
wobei der Sensor nur erlaubt die drahtlose Fernsteuerung die Mähfunktion zu steuern, wenn der Sensor erkennt, dass die Griffstange ordnungsgemäß ausgerichtet ist.

2. Rasenmäher (62) nach Anspruch 1, wobei die drahtlose Fernsteuerung (30) eine Mähfunktion steuert, ausgewählt aus der Gruppe, bestehend aus einem Schneidmotor, einem Antriebsrad, einem Lenkmechanismus und einer Kombination davon.

3. Rasenmäher (62) nach Anspruch 1, wobei die drahtlose Fernsteuerung (30) einen Transmitter umfasst.

4. Rasenmäher (62) nach Anspruch 1, wobei die drahtlose Fernsteuerung (30) einen Empfänger umfasst.

5. Rasenmäher (62) nach Anspruch 1, wobei die drahtlose Fernsteuerung (30) über ein drahtloses Verfahren arbeitet, ausgewählt aus der Gruppe, bestehend aus Radiowellen, Licht, Schallwellen und einer Kombination davon.

6. Rasenmäher (62) nach Anspruch 5, wobei die Radiowellen ein Kommunikationsprotokoll verwenden, ausgewählt aus der Gruppe, bestehend aus W-LAN, Bluetooth, ZigBee, Z-Wave und einer Kombination davon.

7. Rasenmäher (62) nach Anspruch 5, wobei das Licht aus der Gruppe ausgewählt wird, bestehend aus einem infraroten Licht, einem ultravioletten Licht und einer Kombination davon.

8. Rasenmäher (62) nach Anspruch 5, wobei die Schallwellen Ultraschallwellen sind.

9. Rasenmäher (62) nach Anspruch 1, ferner umfassend:
ein Fahrgestell (34), umfassend eine Steuerung, wobei die Steuerung betriebsmäßig mit einer Mähfunktion verbunden ist; und
einen Schneidmotor, welcher an dem Fahrgestell befestigt ist;
wobei die Steuerung eine drahtlose Übertragung von der drahtlosen Fernsteuerung (30) empfängt, und wobei die Steuerung die Mähfunktion basierend auf der drahtlosen Übertragung steuert.

## Revendications

1. Tondeuse à gazon (62) comprenant un manche (20), le manche comprenant :
A. une base (22) qui comprend :
i. un moyen de verrouillage de base (54), dans laquelle le moyen de verrouillage de base est lié de façon ferme et sécurisée à la tondeuse à gazon ; et
ii. un connecteur de moyen de verrouillage de barre de préhension (56) ;
B. une barre de préhension (24) qui comprend :
i. un moyen de verrouillage de base de préhension (26) qui peut être fixé de façon ferme et libérable au connecteur de moyen de verrouillage de barre de préhension ; et
ii. une commande à distance sans fil (30) pour commander une fonction de tondeuse ; et
C. un capteur (60) au niveau d'une localisation de capteur sélectionnée parmi le groupe constitué par la base, le moyen de verrouillage de barre de préhension et une combinaison de ceux-ci, dans laquelle le capteur détecte si oui ou non la barre de préhension est alignée correctement ; et dans laquelle :
le capteur permet que la commande à distance sans fil commande la fonction de tondeuse seulement lorsque le capteur détecte que la barre de préhension est alignée correctement.

2. Tondeuse à gazon (62) selon la revendication 1, dans laquelle la commande à distance sans fil (30) commande une fonction de tondeuse sélectionnée parmi le groupe constitué par un moteur de coupe, une roue d'entraînement, un mécanisme de direction et une combinaison de ceux-ci.

3. Tondeuse à gazon (62) selon la revendication 1, dans laquelle la commande à distance sans fil (30) comprend un émetteur.

4. Tondeuse à gazon (62) selon la revendication 1, dans laquelle la commande à distance dans fil (30) comprend un récepteur.

5. Tondeuse à gazon (62) selon la revendication 1, dans laquelle la commande à distance sans fil (30) fonctionne via un procédé sans fil sélectionné parmi le groupe constitué par les ondes radio, la lumière, les ondes sonores et une combinaison de celles-ci.

6. Tondeuse à gazon (62) selon la revendication 5, dans laquelle les ondes radio utilisent un protocole de communication sélectionné parmi le groupe constitué par Wi-Fi, Bluetooth, ZigBee, Z-Wave et une combinaison de ceux-ci.

7. Tondeuse à gazon (62) selon la revendication 5, dans laquelle la lumière est sélectionnée parmi le groupe constitué par la lumière infrarouge, la lumière ultraviolette et une combinaison de celles-ci.

8. Tondeuse à gazon (62) selon la revendication 5, dans laquelle les ondes sonores sont des ondes sonores ultrasonores.

9. Tondeuse à gazon (62) selon la revendication 1, comprenant en outre :
un châssis (34) qui comprend un contrôleur, le contrôleur étant connecté de manière opérationnelle à une fonction de tondeuse ; et
un moteur de coupe qui est fixé sur le châssis ;
dans laquelle le contrôleur reçoit une émission sans fil en provenance de la commande à distance sans fil (30) et dans laquelle le contrôleur commande la fonction de tondeuse sur la base de l'émission sans fil.
